# FASCICULE DE BREVET EUROPEEN

(11) **EP 3 631 970 B1**
(45) Date de publication et mention de la délivrance du brevet: **29.09.2021**
(21) Numéro de dépôt: 18724296.1
(22) Date de dépôt: 22.05.2018
(51) Int. Cl.: H02P 6/24

(54) **PROCÉDÉ ET UN DISPOSITIF DE CONTRÔLE DE L'ARRÊT D'UN MOTEUR D'UN DISPOSITIF D'OCCULTATION**
VERFAHREN UND VORRICHTUNG ZUR STEUERUNG DES ABSCHALTENS EINES MOTORS EINER VERBERGUNGSVORRICHTUNG
METHOD AND DEVICE FOR CONTROLLING THE SHUTTING DOWN OF A MOTOR OF AN OCCULTING DEVICE

(30) Priorité: 24.05.2017 FR 1754632
(43) Date de publication de la demande: 08.04.2020
(73) Titulaire: Delta Dore, 35270 Bonnemain (FR)
(72) Inventeur: CANO, Cyril, 35270 Bonnemain (FR); CASSAN, Maxime, 35270 Bonnemain (FR)
(74) Mandataire: Cabinet Le Guen Maillet
(86) Numéro de dépôt international: PCT/EP2018/063388
(87) Numéro de publication internationale: WO 2018/215468

(56) Documents cités:
- FR-A1- 2 657 646
- FR-A1- 2 767 860
- JP-A- H03 243 196
- JP-A- S57 138 882
- JP-A- 2016 101 076

## Description

La présente invention concerne un procédé et un dispositif de contrôle de l'arrêt d'un moteur d'un dispositif d'occultation.

Classiquement, dans le contrôle de l'arrêt d'un moteur entrainant un dispositif d'occultation tel que par exemple un volet roulant, il est prévu d'avoir des moyens pour arrêter la rotation d'un moteur.

Les moyens pour arrêter la rotation d'un moteur sont par exemple un frein mécanique, un frein magnétique, un électrofrein, l'interruption de la fourniture en énergie électrique du moteur ou l'arrêt de la fourniture de signaux de commandes tels que des signaux modulés en impulsion de largeur pour les moteurs de type synchrone à courant continu sans balai.

Lorsque les moyens pour arrêter la rotation d'un moteur entrainant un dispositif d'occultation, tel qu'un volet roulant, ne sont plus opérationnels, le volet roulant, de par son poids, provoque la rotation du moteur et redescend.

De plus, les systèmes de commande de dispositifs d'occultation doivent respecter des normes de compatibilité électromagnétique de manière à ne pas générer de perturbations électromagnétiques importantes dans l'environnement du dispositif d'occultation.

Le document JP 2016 101076 A décrit un procédé de contrôle d'un moteur destiné à contrôler la rotation d'un rotor auquel une charge est appliquée. Une force de freinage est appliquée au rotor lorsqu'une vitesse de rotation du rotor dépasse un seuil.

Le document JP S57 138882 A décrit un dispositif de freinage d'un moteur sans balais à courant continu, le dispositif de freinage étant purement électrique.

La présente invention a pour but de résoudre les inconvénients de l'art antérieur en proposant un procédé et un dispositif de contrôle de l'arrêt d'un moteur d'un dispositif d'occultation qui ne génère pas de perturbations électromagnétiques importantes dans l'environnement du dispositif d'occultation.

A cette fin, selon un premier aspect, l'invention propose un procédé de contrôle de l'arrêt d'un moteur d'un dispositif d'occultation, le moteur étant un moteur synchrone à courant continu sans balai piloté par un dispositif de contrôle par l'intermédiaire d'un circuit de commande, le moteur synchrone à courant continu sans balai comprenant des bobines, chaque bobine comportant une première et une seconde terminaisons, les premières terminaisons étant reliées entre elles et les secondes terminaisons étant alimentées en énergie pour provoquer la rotation du moteur, caractérisé en ce que le procédé comporte les étapes, exécutées par le dispositif de contrôle, de :
- détection d'une commande d'arrêt du dispositif d'occultation,
- interruption de la fourniture de signaux de commande au circuit de commande,
- détermination de l'arrêt du moteur,
- commande d'un dispositif de commutation pour relier les secondes terminaisons des bobines uniquement lorsque le moteur est déterminé comme arrêté.

L'invention concerne aussi un dispositif de contrôle de l'arrêt d'un moteur d'un dispositif d'occultation, le moteur étant un moteur synchrone à courant continu sans balai piloté par un dispositif de contrôle du fonctionnement du moteur par l'intermédiaire d'un circuit de commande, le moteur synchrone à courant continu sans balai comprenant des bobines, chaque bobine comportant une première et une seconde terminaisons, les premières terminaisons étant reliées entre elles et les secondes terminaisons étant alimentées en énergie pour provoquer la rotation du moteur, caractérisé en ce que le dispositif de contrôle comporte :
- des moyens de détection d'une commande d'arrêt du dispositif d'occultation,
- des moyens d'interruption de la fourniture de signaux de commande au circuit de commande,
- des moyens de détermination de l'arrêt du moteur,
- des moyens de commande d'un dispositif de commutation pour relier les secondes terminaisons des bobines uniquement lorsque le moteur est déterminé comme arrêté.

Ainsi, la présente invention offre deux moyens pour contrôler l'arrêt du moteur et ne génère pas de perturbations électromagnétiques importantes dans l'environnement du dispositif d'occultation.

Le changement d'état du dispositif de commutation lorsque le moteur est en cours de rotation génère des perturbations électromagnétiques sur les éléments électroniques autour de celui-ci. En effet, l'inertie du moteur l'empêche de s'arrêter instantanément et pendant cette phase, une force contre-électromotrice est présente et génère du courant induit par les bobinages du moteur au travers du dispositif de commutation. En ne commandant le dispositif de commutation que lorsque le moteur est déterminé comme arrêté, la différence de potentiel des bobines du moteur est nulle et les perturbations électromagnétiques sont ainsi réduites.

Selon un mode particulier de l'invention, au moins un capteur de rotation du moteur détecte la rotation du moteur et le moteur est déterminé comme arrêté si le au moins un capteur de rotation délivre un signal constant pendant une première durée prédéterminée.

Ainsi, la détermination de l'arrêt du moteur est certaine.

Selon un mode particulier de l'invention, deux capteurs de rotation du moteur détectent la rotation du moteur et le moteur est déterminé comme arrêté si les capteurs de rotation délivrent un signal constant pendant la première durée prédéterminée.

Ainsi, la détermination de l'arrêt du moteur est certaine.

Selon un mode particulier de l'invention, les capteurs sont des capteurs à effet Hall et la première durée prédéterminée est égale à 70 millisecondes.

Ainsi, comme le champ magnétique, généré par l'aimant bipolaire relié au rotor du moteur, tourne à la vitesse de fonctionnement du moteur, les capteurs à effet Hall mesurent ainsi une période proportionnelle à la vitesse de rotation du moteur. Si la période mesurée devient supérieure à la durée prédéterminée, on considère que le courant induit dans les bobines est suffisamment faible voire nul. Les perturbations électromagnétiques deviennent négligeables.

Selon un mode particulier de l'invention, le moteur est déterminé comme arrêté un temps prédéterminé après l'interruption de la fourniture de signaux de commande au circuit de commande.

Ainsi, la présente invention n'a pas besoin de capteurs, le coût de fabrication est réduit.

Selon un mode particulier de l'invention, le temps prédéterminé est égal à 250 millisecondes.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de commande d'un moteur selon la présente invention ;
la Fig. 2 représente un exemple d'architecture d'un dispositif de contrôle selon la présente invention ;
la Fig. 3 représente un algorithme de contrôle de l'arrêt d'un moteur selon la présente invention ;
la Fig. 4 représente un exemple de chronogramme de signaux pour contrôler l'arrêt d'un moteur selon la présente invention.

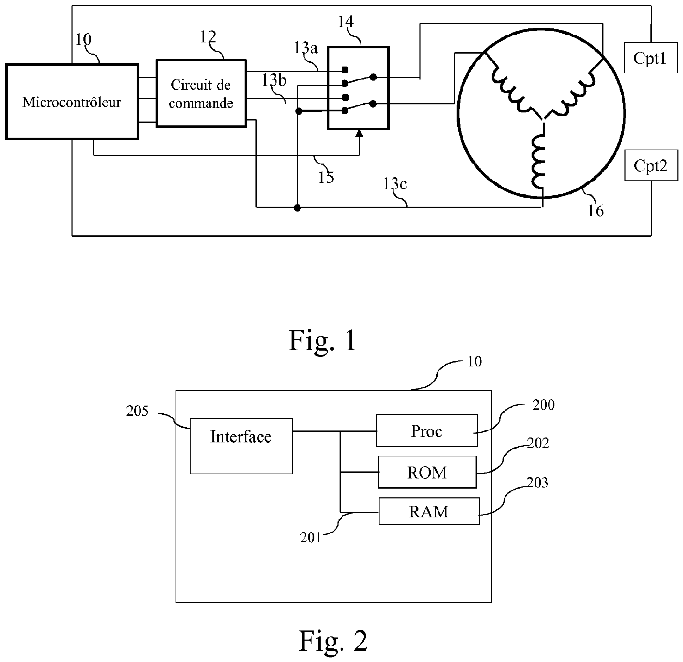

La **Fig. 1** représente un système de commande d'un moteur selon la présente invention.

Le système de commande d'un moteur comporte un dispositif de contrôle 10, un circuit de commande 12, un dispositif de commutation 14 et un moteur 16.

Le dispositif de contrôle 10 est par exemple un microcontrôleur qui génère des signaux à destination du circuit de commande 12 pour provoquer la rotation du moteur 16.

Des capteurs Cpt1 et Cpt2 de rotation du moteur sont connectés au dispositif de contrôle 10 pour, entre autres déterminer, si le moteur 10 est en rotation ou non.

Les capteurs Cpt1 et Cpt2 sont par exemple des capteurs à effet Hal1.

Le dispositif de contrôle 10 commande le dispositif de commutation 14 par l'intermédiaire d'une liaison 15.

Le moteur 16 est un moteur synchrone à courant continu sans balai.

Le circuit de commande 12 amplifie les signaux reçus du microcontrôleur 10 pour fournir les signaux de commande 13a, 13b et 13c au moteur 16. Le circuit de commande est par exemple constitué de transistors bipolaires à grille isolée (IGBT, de l'anglais Insulated Gate Bipolar Transistor).

Les sorties du circuit de commande 12 sont reliées ou non au moteur 16 via un circuit de commutation 14.

Dans l'exemple de la Fig. 1, le moteur 16 comporte trois bobines, chaque bobine comporte une première et une seconde terminaisons, les premières terminaisons sont reliées entre elles.

Le circuit de commutation 14 est par exemple un relais qui, dans une première configuration, relie chaque sortie 13a à 13c du circuit de commande 12 à une seconde terminaison d'une bobine du moteur 16.

Dans la seconde configuration et selon la présente invention, le relais est mis dans une seconde configuration pour relier les secondes terminaisons des bobines lorsque le moteur est déterminé comme arrêté.

La **Fig. 2** représente un exemple d'architecture d'un dispositif de contrôle selon la présente invention.

Le dispositif de contrôle 10 comprend :
- un processeur, micro-processeur, ou microcontrôleur 200 ;
- une mémoire volatile 203 ;
- une mémoire non volatile 202 ;
- une interface entrée sortie 205 ;
- un bus de communication reliant le processeur 200 à la mémoire ROM 203, à la mémoire RAM 203 et l'interface 205.

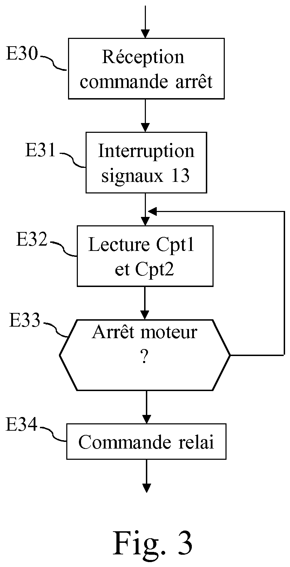

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de contrôle 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 3.

Tout ou partie du procédé décrit en relation avec la Fig. 3 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur, ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La Fig. 3 représente un algorithme de contrôle de l'arrêt d'un moteur selon la présente invention.

Plus précisément, le présent algorithme est décrit dans un exemple dans lequel il est exécuté par le processeur 200 du dispositif de contrôle 10.

A l'étape E30, une commande d'arrêt du moteur est reçue.

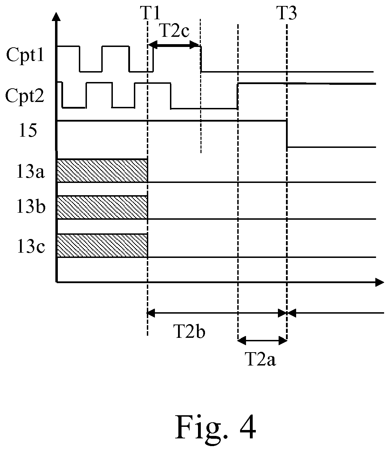

A l'étape E31, le processeur 200 commande l'interruption de la fourniture de signaux de commande au circuit de commande 12 comme cela est représenté en Fig. 4.

La **Fig. 4** représente un exemple de chronogramme de signaux pour contrôler l'arrêt d'un moteur selon la présente invention.

Dans la Fig. 4, les signaux issus des capteurs Cpt1 et Cpt2, le signal de commande 15 du dispositif de commutation 14 et les signaux 13a à 13c sont représentés.

A partir de l'instant T1, la fourniture de signaux de commande au circuit de commande 12 est interrompue.

Comme cela est représenté en Fig. 4, les capteurs Cpt1 et Cpt2 détectent une rotation du moteur 16 pendant une durée T2c.

A l'étape E32, le processeur 200 lit les signaux délivrés par les capteurs Cpt1 et Cpt2.

A l'étape E33, le processeur 200 détermine si le moteur 16 est toujours en rotation.

Si le moteur 16 est à l'arrêt, le processeur 200 passe à l'étape E34. Si le moteur 16 est toujours en rotation, le processeur 200 retourne à l'étape E33.

Le processeur 200 détermine que le moteur 16 est à l'arrêt, par exemple en vérifiant si les signaux délivrés par les capteurs Cpt1 et Cpt2 sont stables pendant une durée prédéterminée T2a, par exemple égale à 70ms.

Le processeur 200 détermine que le moteur 16 est à l'arrêt, par exemple en attendant un temps prédéterminé T2b, par exemple égal à 250 ms, après l'interruption de la fourniture de signaux de commande au circuit de commande 12.

A l'étape E34, le processeur 200 commande, à partir de l'instant T3, le dispositif de commutation 14 pour relier ensemble les secondes terminaisons des bobines du moteur 16.

## Revendications

1. Procédé de contrôle de l'arrêt d'un moteur (16) d'un dispositif d'occultation, le moteur (16) étant un moteur (16) synchrone à courant continu sans balai piloté par un dispositif de contrôle (10) par l'intermédiaire d'un circuit de commande (12), le moteur (16) synchrone à courant continu sans balai comprenant des bobines, chaque bobine comportant une première et une seconde terminaison, les premières terminaisons étant reliées entre elles et les secondes terminaisons étant alimentées en énergie pour provoquer la rotation du moteur (16), **caractérisé en ce que** le procédé comporte les étapes, exécutées par le dispositif de contrôle (10), de :
- détection (E30) d'une commande d'arrêt du dispositif d'occultation,
- interruption (E31) de la fourniture de signaux de commande au circuit de commande (12),
- détermination (E33) de l'arrêt du moteur,
- commande (E34) d'un dispositif de commutation (14) pour relier les secondes terminaisons des bobines uniquement lorsque le moteur est déterminé comme arrêté.

2. Procédé selon la revendication 1, **caractérisé en ce que** au moins un capteur de rotation (Cpt1, Cpt2) du moteur (16) détecte la rotation du moteur (16) et **en ce que** le moteur (16) est déterminé comme arrêté si le au moins un capteur de rotation (Cpt1, Cpt2) délivre un signal constant pendant une première durée prédéterminée.

3. Procédé selon la revendication 2, **caractérisé en ce que** deux capteurs de rotation (Cpt1, Cpt2) du moteur (16) détectent la rotation du moteur (16) et **en ce que** le moteur (16) est déterminé comme arrêté si les capteurs de rotation (Cpt1, Cpt2) délivrent un signal constant pendant la première durée prédéterminée.

4. Procédé selon la revendication 2, **caractérisé en ce que** les capteurs (Cpt1, Cpt2) sont des capteurs à effet Hall et **en ce que** la première durée prédéterminée est égale à 70 millisecondes.

5. Procédé selon la revendication 1, **caractérisé en ce que** le moteur (16) est déterminé comme arrêté un temps prédéterminé après l'interruption de la fourniture de signaux de commande au circuit de commande (12).

6. Procédé selon la revendication 5, **caractérisé en ce que** le temps prédéterminé est égal à 250 millisecondes.

7. Dispositif de contrôle (10) de l'arrêt d'un moteur (16) d'un dispositif d'occultation, le moteur (16) étant un moteur synchrone à courant continu sans balai piloté par un dispositif de contrôle (10) du fonctionnement du moteur (16) par l'intermédiaire d'un circuit de commande (12), le moteur (16) synchrone à courant continu sans balai comprenant des bobines, chaque bobine comportant une première et une seconde terminaison, les premières terminaisons étant reliées entre elles et les secondes terminaisons étant alimentées en énergie pour provoquer la rotation du moteur (16), **caractérisé en ce que** le dispositif de contrôle (10) comporte :
- des moyens de détection d'une commande d'arrêt du dispositif d'occultation,
- des moyens d'interruption de la fourniture de signaux de commande au circuit de commande (12),
- des moyens de détermination de l'arrêt du moteur (16),
- des moyens de commande d'un dispositif de commutation (14) pour relier les secondes terminaisons des bobines uniquement lorsque le moteur est déterminé comme arrêté.

8. Dispositif selon la revendication 7, **caractérisé en ce que** au moins un capteur de rotation (Cpt1, Cpt2) du moteur (16) détecte la rotation du moteur et **en ce que** les moyens de détermination de l'arrêt du moteur le moteur déterminent le moteur (16) comme arrêté si le au moins un capteur de rotation (Cpt1, Cpt2) délivre un signal constant pendant un première durée prédéterminée.

9. Dispositif selon la revendication 8, **caractérisé en ce que** deux capteurs de rotation (Cpt1, Cpt2) du moteur (16) détectent la rotation du moteur (16) et **en ce que** le moteur (16) est déterminé comme arrêté si les capteurs de rotation (Cpt1, Cpt2) délivrent un signal constant pendant la première durée prédéterminée.

## Patentansprüche

1. Verfahren zur Kontrolle des Abschaltens eines Motors (16) einer Verdunkelungsvorrichtung, wobei der Motor (16) ein bürstenloser Gleichstrom-Synchronmotor (16) ist, der von einer Kontrollvorrichtung (10) über einen Steuerkreis (12) gesteuert wird, wobei der bürstenlose Gleichstrom-Synchronmotor (16) Spulen enthält, wobei jede Spule einen ersten und einen zweiten Abschluss aufweist, wobei die ersten Abschlüsse miteinander verbunden sind und die zweiten Abschlüsse mit Energie versorgt werden, um die Drehung des Motors (16) zu bewirken, **dadurch gekennzeichnet, dass** das Verfahren die von der Kontrollvorrichtung (10) ausgeführten Schritte aufweist:
- Erfassen (E30) einer Abschaltsteuerung der Verdunkelungsvorrichtung,
- Unterbrechen (E31) des Lieferns von Steuersignalen an den Steuerkreis (12),
- Bestimmen (E33) der Abschaltung des Motors,
- Steuern (E34) einer Schaltvorrichtung (14), um die zweiten Abschlüsse der Spulen nur zu verbinden, wenn der Motor als abgeschaltet bestimmt wird.

2. Verfahren nach Anspruch 1, **dadurch gekennzeichnet, dass** mindestens ein Drehsensor (Cpt1, Cpt2) des Motors (16) die Drehung des Motors (16) erfasst, und dass der Motor (16) als abgeschaltet bestimmt wird, wenn der mindestens eine Drehsensor (Cpt1, Cpt2) während einer vorbestimmten ersten Dauer ein konstantes Signal liefert.

3. Verfahren nach Anspruch 2, **dadurch gekennzeichnet, dass** zwei Drehsensoren (Cpt1, Cpt2) des Motors (16) die Drehung des Motors (16) erfassen, und dass der Motor (16) als abgeschaltet bestimmt wird, wenn die Drehsensoren (Cpt1, Cpt2) während der vorbestimmten ersten Dauer ein konstantes Signal liefern.

4. Verfahren nach Anspruch 2, **dadurch gekennzeichnet, dass** die Sensoren (Cpt1, Cpt2) Hall-Effekt-Sensoren sind, und dass die vorbestimmte erste Dauer gleich 70 Millisekunden ist.

5. Verfahren nach Anspruch 1, **dadurch gekennzeichnet, dass** der Motor (16) eine vorbestimmte Zeit nach der Unterbrechung des Lieferns von Steuersignalen an den Steuerkreis (12) als abgeschaltet bestimmt wird.

6. Verfahren nach Anspruch 5, **dadurch gekennzeichnet, dass** die vorbestimmte Zeit gleich 250 Millisekunden ist.

7. Kontrollvorrichtung (10) der Abschaltung eines Motors (16) einer Verdunkelungsvorrichtung, wobei der Motor (16) ein bürstenloser Gleichstrom-Synchronmotor ist, der von einer Kontrollvorrichtung (10) des Betriebs des Motors (16) über einen Steuerkreis (12) gesteuert wird, wobei der bürstenlose Gleichstrom-Synchronmotor (16) Spulen enthält, wobei jede Spule einen ersten und einen zweiten Abschluss aufweist, wobei die ersten Abschlüsse miteinander verbunden sind und die zweiten Abschlüsse mit Energie versorgt werden, um die Drehung des Motors (16) zu bewirken, **dadurch gekennzeichnet, dass** die Kontrollvorrichtung (10) aufweist:
- Einrichtungen zur Erfassung einer Abschaltsteuerung der Verdunkelungsvorrichtung,
- Einrichtungen zur Unterbrechung des Lieferns von Steuersignalen an den Steuerkreis (12),
- Einrichtungen zur Bestimmung der Abschaltung des Motors (16),
- Einrichtungen zur Steuerung einer Schaltvorrichtung (14), um die zweiten Abschlüsse der Spulen nur zu verbinden, wenn der Motor als abgeschaltet bestimmt wird.

8. Vorrichtung nach Anspruch 7, **dadurch gekennzeichnet, dass** mindestens ein Drehsensor (Cpt1, Cpt2) des Motors (16) die Drehung des Motors erfasst, und dass die Bestimmungseinrichtungen der Abschaltung des Motors den Motor (16) als abgeschaltet bestimmen, wenn der mindestens eine Drehsensor (Cpt1, Cpt2) während einer vorbestimmten ersten Dauer ein konstantes Signal liefert.

9. Vorrichtung nach Anspruch 8, **dadurch gekennzeichnet, dass** zwei Drehsensoren (Cpt1, Cpt2) des Motors (16) die Drehung des Motors (16) erfassen, und dass der Motor (16) als abgeschaltet bestimmt wird, wenn die Drehsensoren (Cpt1, Cpt2) während der vorbestimmten ersten Dauer ein konstantes Signal liefern.

## Claims

1. Method for controlling the stopping of a motor (16) for a covering device, the motor (16) being a brushless DC synchronous motor (16) driven by a control device (10) via a control circuit (12), the brushless DC synchronous motor (16) comprising coils, each coil having a first and a second end, the first ends being connected to one another and the second ends being supplied with energy so as to cause the motor (16) to rotate, **characterized in that** the method comprises the steps, carried out by the control device (10), of:
- detecting (E30) a command to stop the covering device,
- interrupting (E31) the delivery of control signals to the control circuit (12),
- determining (E33) the stopping of the motor,
- controlling (E34) a switching device (14) to connect the second ends of the coils only when the motor is determined as having stopped.

2. Method according to Claim 1, **characterized in that** at least one motor (16) rotation sensor (Cpt1, Cpt2) detects the rotation of the motor (16) and **in that** the motor (16) is determined as having stopped if the at least one rotation sensor (Cpt1, Cpt2) delivers a constant signal for a first predetermined duration.

3. Method according to Claim 2, **characterized in that** two motor (16) rotation sensors (Cpt1, Cpt2) detect the rotation of the motor (16) and **in that** the motor (16) is determined as having stopped if the rotation sensors (Cpt1, Cpt2) deliver a constant signal for the first predetermined duration.

4. Method according to Claim 2, **characterized in that** the sensors (Cpt1, Cpt2) are Hall effect sensors and **in that** the first predetermined duration is equal to 70 milliseconds.

5. Method according to Claim 1, **characterized in that** the motor (16) is determined as having stopped a predetermined time after the interruption of the delivery of control signals to the control circuit (12).

6. Method according to Claim 5, **characterized in that** the predetermined time is equal to 250 milliseconds.

7. Device (10) for controlling the stopping of a motor (16) for a covering device, the motor (16) being a brushless DC synchronous motor (16) driven by a control device (10) for controlling the operation of the motor (16) via a control circuit (12), the brushless DC synchronous motor (16) comprising coils, each coil having a first and a second end, the first ends being connected to one another and the second ends being supplied with energy so as to cause the motor (16) to rotate, **characterized in that** the control device (10) comprises:
- means for detecting a command to stop the covering device,
- means for interrupting the delivery of control signals to the control circuit (12),
- means for determining the stopping of the motor (16),
- means for controlling a switching device (14) to connect the second ends of the coils only when the motor is determined as having stopped.

8. Device according to Claim 7, **characterized in that** at least one motor (16) rotation sensor (Cpt1, Cpt2) detects the rotation of the motor and **in that** the means for determining the stopping of the motor determine that the motor (16) has stopped if the at least one rotation sensor (Cpt1, Cpt2) delivers a constant signal for a first predetermined duration.

9. Device according to Claim 8, **characterized in that** two motor (16) rotation sensors (Cpt1, Cpt2) detect the rotation of the motor and **in that** the motor (16) is determined as having stopped if the rotation sensors (Cpt1, Cpt2) deliver a constant signal for the first predetermined duration.
